# EUROPEAN PATENT APPLICATION

(11) **EP 4 641 984 A1**
(43) Date of publication of application: **29.10.2025**
(21) Application number: 22968799.1
(22) Date of filing: 19.12.2022
(51) Int. Cl.: H04L 27/00

(54) **METHOD AND APPARATUS FOR TRANSMITTING WAKE-UP SIGNAL, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/140055
(87) International publication number: WO 2024/130495

(57) **Abstract**

Provided in the present disclosure are a method and apparatus for transmitting a wake-up signal, and a readable storage medium. The method comprises: when first-type system information is changed, sending a low-power wake-up signal (LP WUS) to a user equipment. In the method of the present disclosure, when first-type system information is changed, a network device sends an LP WUS to a user equipment to wake up the user equipment in a timely manner, so as to optimize an occasion for sending of the LP WUS by the network device, which is conducive to maintaining the energy conservation of the user equipment on the basis of scheduling the user equipment in a timely manner.

## Description

### TECHNICAL FIELD

The present disclosure relates to the field of wireless communication technologies, and in particular to method and device for transferring a wake-up signal and a readable storage medium.

### BACKGROUND

The low power wake up signal (LP WUS) was introduced in Release 18 (R18) of the 3rd Generation Partnership Project (3GPP). The base station sends LP WUS to the user equipment (UE) to wake up the UE. The UE can use a separate low-power receiver to monitor and receive LP WUS, and then wake up the main receiver to send and receive data after receiving LP WUS, thereby achieving energy saving for the UE. The timing of the base station sending LP WUS needs to be optimized.

### SUMMARY

The present disclosure provides method and device for transferring a wake-up signal and a readable storage medium.

According to a first aspect of the present disclosure, there is provided a method for sending a wake-up signal, performed by a network device, including:
when a first type of system information is changed, sending a low power wake-up signal LP WUS to a user equipment.

In the method of the present disclosure, when the first type of system information is changed, the network device sends the LP WUS to the user equipment to wake up the user equipment in time, thereby optimizing the timing of the network device sending the LP WUS, which is conducive to maintaining the energy saving of the user equipment on the basis of timely scheduling of the user equipment.

In some possible implementations, the method further includes:
when system information other than the first type of system information is changed, not sending the LP WUS.

In some possible implementations, the method further includes:
sending indication information to the user equipment, where the indication information is configured to indicate a wake-up reason for waking up the user equipment.

In some possible implementations, the LP WUS includes the indication information.

In some possible implementations, the wake-up reason is configured to indicate at least one of:
monitoring paging information;
performing mobility measurement;
monitoring system information other than the first type of system information.

In some possible implementations, the first type of system information includes at least one of:
system information related to LP WUS configuration information;
system information related to paging configuration information;
system information related to mobility measurement configuration information;
any system information block SIB.

According to a second aspect of the present disclosure, there is provided a method for receiving a wake-up signal, performed by a user equipment, including:
receiving an LP WUS, where the LP WUS is sent by a network device when a first type of system information is changed.

In the method of the present disclosure, when the first type of system information is changed, the network device sends the LP WUS to the user equipment to wake up the user equipment in time, thereby optimizing the timing of the network device sending the LP WUS, which is conducive to maintaining the energy saving of the user equipment on the basis of timely scheduling of the user equipment.

In some possible implementations, the method further includes:
after receiving the LP WUS, the user equipment first monitors system information after switching from a sleep state to a working state.

In some possible implementations, the method further includes:
receiving indication information sent by the network device, where the indication information is configured to indicate a wake-up reason.

In some possible implementations, the LP WUS includes the indication information.

In some possible implementations, the wake-up reason is configured to indicate at least one of:
monitoring paging information;
performing mobility measurement;
monitoring system information other than the first type of system information.

In some possible implementations, the first type of system information includes at least one of:
system information related to LP WUS configuration information;
system information related to paging configuration information;
system information related to mobility measurement configuration information;
any system information block SIB.

In some possible implementations, when the wake-up reason indicates monitoring paging information, the method further includes one of:
if the first type of system information includes system information related to paging configuration information, after receiving the LP WUS, the user equipment first monitors paging information after switching from a sleep state to a working state;
if the first type of system information is system information related to LP WUS configuration information, or does not include system information related to paging configuration information, after receiving the LP WUS, the user equipment first monitors the system information related to the paging configuration information after switching from a sleep state to a working state.

In some possible implementations, when the wake-up reason indicates performing mobility measurement, the method further includes one of:
if the first type of system information is system information related to LP WUS configuration information, or does not comprise system information related to mobility measurement configuration information, after receiving the LP WUS, the user equipment first monitors the system information related to the mobility measurement configuration information after switching from a sleep state to a working state;
if the first type of system information includes system information related to mobility measurement configuration information, after receiving the LP WUS, the user equipment first performs mobility measurement after switching from a sleep state to a working state.

In some possible implementations, the method further includes:
when the wake-up reason indicates monitoring system information other than the first type of system information, after receiving the LP WUS, the user equipment first monitors system information after switching from a sleep state to a working state.

According to a third aspect of the present disclosure, there is provided a device for sending a wake-up signal. The device can be configured to perform steps performed by a network device in the first aspect described above or in any of possible designs of the first aspect. The network device may implement each of the functions in each of the methods described above in the form of a hardware structure, a software module, or a hardware structure plus a software module.

When implementing the device according to the third aspect by the software module, the device may include a transceiver module, where the transceiver module may be configured to support the communication device to communicate.

When performing steps according to the first aspect described above, the transceiver module is configured to send a low power wake-up signal LP WUS to a user equipment when a first type of system information is changed.

According to a fourth aspect of the present disclosure, there is provided a device for receiving a wake-up signal. The device can be configured to perform steps performed by a user equipment in the second aspect described above or in any of possible designs of the second aspect. The user equipment may implement each of the functions in each of the methods described above in the form of a hardware structure, a software module, or a hardware structure plus a software module.

When implementing the device according to the fourth aspect by the software module, the device may include a transceiver module, where the transceiver module may be configured to support the communication device to communicate.

When performing steps according to the second aspect described above, the transceiver module is configured to receive an LP WUS, where the LP WUS is sent by a network device when a first type of system information is changed.

According to a fifth aspect of the present disclosure, there is provided a network device, including a processor and a memory. The memory is configured to store a computer program; and the processor is configured to execute the computer program to implement the first aspect or any of possible designs of the first aspect.

According to a sixth aspect of the present disclosure, there is provided a user equipment, including a processor and a memory. The memory is configured to store a computer program; and the processor is configured to execute the computer program to implement the second aspect or any of possible designs of the second aspect.

According to a seventh aspect of the present disclosure, there is provided a computer-readable storage medium, where instructions (or computer programs, programs) are stored in the computer-readable storage medium, and when the instructions are called and executed on a computer, the computer implements the first aspect or any of possible designs of the first aspect.

According to an eighth aspect of the present disclosure, there is provided a computer-readable storage medium, wherein instructions are stored in the computer-readable storage medium, and when the instructions are called and executed on a computer, the computer implements the second aspect or any of possible designs of the second aspect.

It should be understood that the above general description and the detailed description that follows are exemplary and explanatory only and do not limit the present disclosure.

### BRIEF DESCRIPTION OF THE DRAWINGS

The drawings described herein are used to provide further understanding of the embodiments of the present disclosure and constitute a part of the present application. The schematic embodiments of the embodiments of the present disclosure and their descriptions are used to explain the embodiments of the present disclosure and do not constitute improper limitations on the embodiments of the present disclosure. In the drawings:

The drawings herein are incorporated into the description and constitute a part of the description, showing embodiments that conform to the embodiments of the present disclosure, and together with the description, are used to explain the principles of the embodiments of the present disclosure.
FIG. 1 is a schematic diagram of a wireless communication system architecture provided by an embodiment of the present disclosure;
FIG. 2 is a flow chart of a method for transferring a wake-up signal according to an example embodiment;
FIG. 3 is a flow chart of a method for sending a wake-up signal according to an example embodiment;
FIG. 4 is a flow chart of a method for sending a wake-up signal according to an example embodiment;
FIG. 5 is a flow chart of a method for receiving a wake-up signal according to an example embodiment;
FIG. 6 is a flow chart of another method for receiving a wake-up signal according to an example embodiment;
FIG. 7 is a block diagram of a device for sending a wake-up signal according to an example embodiment;
FIG. 8 is a block diagram of a communication device according to an example embodiment;
FIG. 9 is a block diagram of a device for receiving a wake-up signal according to an example embodiment;
FIG. 10 is a block diagram of a user equipment according to an example embodiment.

### DETAILED DESCRIPTION

The embodiments of the present disclosure are now further described in conjunction with the drawings and specific embodiments.

The example embodiments will be described in detail here, and examples thereof are shown in the drawings. When the following description refers to the drawings, unless otherwise indicated, the same numbers in different drawings represent the same or similar elements. The embodiments described in the following example embodiments do not represent all embodiments consistent with the embodiments of the present disclosure. Instead, they are only examples of devices and methods consistent with some aspects of the present disclosure as detailed in the attached claims.

The terms used in the embodiments of the present disclosure are only for the purpose of describing specific embodiments and are not intended to limit the embodiments of the present disclosure. The singular forms "a", "an" and "the" used in the embodiments of the present disclosure and the attached claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used in the embodiments of the present disclosure to describe various information, and such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if" as used herein may be interpreted as "at" or "when" or "in response to determining".

The embodiments of the present disclosure are described in detail below, and examples of the embodiments are shown in the accompanying drawings, wherein the same or similar reference numerals throughout represent the same or similar elements. The embodiments described below with reference to the accompanying drawings are exemplary and are intended to be used to explain the present disclosure, and cannot be understood as limiting the present disclosure.

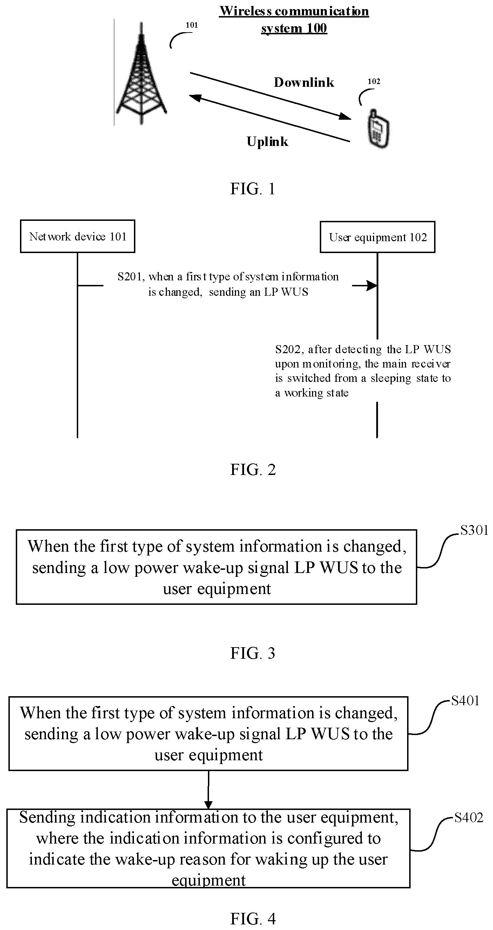

As shown in FIG. 1, a method for transferring a wake-up signal provided in an embodiment of the present disclosure may be applied to a wireless communication system 100. The wireless communication system 100 may include a network device 101 and a user equipment 102. The user equipment 102 is configured to support carrier aggregation and may be connected to multiple carrier units of the network device 101. The multiple carrier units include one main carrier unit and one or more auxiliary carrier units.

It should be understood that the above wireless communication system 100 may be applicable to both low-frequency scenarios and high-frequency scenarios. The application scenarios of the wireless communication system 100 include but are not limited to the long term evolution (LTE) system, the LTE frequency division duplex (FDD) system, the LTE time division duplex (TDD) system, the worldwide interoperability for micro wave access (WiMAX) communication system, the cloud radio access network (CRAN) system, the future fifth generation (5G) system, the new radio (NR) communication system or the future evolved public land mobile network (PLMN) system, etc.

The user equipment 102 shown above may be a terminal, an access terminal, a terminal unit, a terminal station, a mobile station (MS), a remote station, a remote terminal, a mobile terminal, a wireless communication device, a terminal agent or a terminal device, etc. The user equipment 102 can have a wireless transceiver function, which can communicate with one or more network devices of one or more communication systems (such as wireless communication) and receive network services provided by the network devices, where the network devices include but are not limited to the illustrated network device 101.

The user equipment 102 may be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a terminal device in a future 5G network, or a terminal device in a future evolved PLMN network, etc.

The network device 101 may be an access network device (or access network point). The access network device refers to a device that provides network access function, such as a radio access network (RAN) base station, etc. The network device 101 may specifically include a base station (BS), or the network device 101 may include a base station and a wireless resource management device for controlling the base station, etc. The network device 101 may also include a relay station (relay device), an access point, a base station in a future 5G network, a base station in a future evolved PLMN network, or an NR base station, etc. The network device 101 may be a wearable device or a vehicle-mounted device. The network device 101 may also be a communication chip with a communication module.

For example, the network device 101 includes but is not limited to: the next generation base station (gnodeB, gNB) in 5G, the evolved node B (eNB) in the LTE system, the radio network controller (RNC), the node B (NB) in the WCDMA system, the radio controller under the CRAN system, the base station controller (BSC), the base transceiver station (BTS) in the GSM system or CDMA system, the home base station (for example, home evolved nodeB, or home node B, HNB), the baseband unit (BBU), the transmitting and receiving point (TRP), the transmitting point (TP) or the mobile switching center, etc.

In the relevant protocols, the system information (SI) is divided into many types, for example, the system information related to the paging configuration, the system information related to the radio resource management (RRM) measurement, the system information related to the positioning, the system information related to the security alarm, etc. LP WUS configuration information may also be sent to the user equipment as the system information.

In the scenario where the system information is changed, the network device 101 sends LP WUS to wake up the user equipment at what time is a problem that needs to be solved.

The embodiment of the present disclosure provides a method for transferring a wake-up signal. Referring to FIG. 2, FIG. 2 is a method for transferring a wake-up signal according to an example embodiment. As shown in FIG. 2, the method includes steps S201 to S202. Specifically:
Step S201, when a first type of system information is changed, the network device 101 sends a low power wake-up signal LP WUS to the user equipment 102.

In some possible implementations, from the mechanism of the user equipment 102 updating the system information, the system information may include the following two parts: a first part of the system information requires the UE to update, to ensure that the UE always retains the valid version of the system information, such as System Information Block 1 (SIB1) to SIB4, SIB related to RRM measurement, etc.; and a second part of the system information (SI), the UE does not need to always keep the valid version of the SI, and only needs to obtain the latest system information when necessary, such as positioning system information (posSIB), SIB6, etc.

In one example, the method of the embodiment of the present disclosure may be applicable to the network device 101 sending the LP WUS at what timing or what system information changes in the scenario where the first part of the system information changes or is about to change.

In one example, the first type of system information may be any system information block SIB. For example, the network device 101 sends the LP WUS to the user equipment 102 because of any SIB change to wake up the user equipment 102 to monitor the corresponding system information. The SIB may be system information related to paging information, or system information related to RRM measurement.

In some possible implementations, the first type of system information may be system information related to the LP WUS configuration information. When the system information related to the LP WUS configuration information changes or is about to change, the network device 101 sends the LP WUS to wake up the user equipment 102 to monitor the system information, otherwise the user equipment 102 may not receive the LP WUS after the configuration is updated. When other system information, such as system information related to paging information, or system information related to RRM measurement is changed, the network device 101 does not send LP WUS, because the user equipment 102 in the LP WUS monitoring state may not need to obtain such changed system information.

In some possible implementations, the first type of system information may be system information related to paging configuration information. When the system information related to the paging configuration information changes or is about to change, the network device 101 sends LP WUS to wake up the user equipment 102 to monitor the system information, otherwise the user equipment 102 may not receive the paging information after the configuration is updated.

In some possible implementations, the first type of system information may be system information related to mobility measurement configuration information. When the system information related to the mobility measurement configuration information changes or is about to change, the network device 101 sends LP WUS to wake up the user equipment 102 to monitor the system information, otherwise the user equipment 102 may not receive the paging information after the configuration is updated. The mobility measurement is, for example, RRM measurement.

Step S202, after the user equipment 102 detects the LP WUS upon monitoring, the main receiver switches from the sleep state to the working state.

In some possible implementations, in the LP WUS monitoring state, the main receiver of the user equipment 102 is in a sleep state, and monitors the LP WUS through a low power receiver. In the sleep state, the user equipment 102 may not monitor the Physical Downlink Control Channel (PDCCH) to achieve effective energy saving.

In some possible implementations, after the LP WUS being detected upon monitoring, the main receiver of the user equipment 102 is passively waked up, converted from a sleep state to a working state, and can monitor the corresponding PDCCH.

In the embodiment of the present disclosure, when the first type of system information is changed, the network device 101 sends the LP WUS to the user equipment 102 to wake up the user equipment 102 in time, thereby optimizing the timing of the network device 101 sending the LP WUS, which is conducive to maintaining the energy saving of the user equipment on the basis of timely scheduling of the user equipment.

The embodiment of the present disclosure provides a method for sending a wake-up signal, which is executed by the network device 101. Referring to FIG. 3, FIG. 3 is a method for sending a wake-up signal according to an example embodiment. As shown in FIG. 3, the method includes step S301, specifically:
Step S301, when the first type of system information is changed, the network device 101 sends a low power wake-up signal LP WUS to the user equipment 102.

In some possible implementations, before receiving the LP WUS, the user equipment 102 may be in a state of monitoring the LP WUS to achieve energy saving of the user equipment 102.

In some possible implementations, the first type of system information belongs to the first part of the system information. The first part of system information meets the following characteristics: the UE is required to update the system information to always retain the valid version of this type of system information.

In some possible implementations, the first type of system information may be any system information block SIB.

In some possible implementations, the first type of system information may be system information related to LP WUS configuration information.

In one example, the LP WUS configuration information includes one or more of the time domain resources, frequency domain resources, power information, and spatial domain information for sending LP WUS.

In some possible implementations, the first type of system information may be system information related to paging configuration information.

In one example, the paging configuration information includes the search space and paging time domain resources of the paging information, where the paging time domain resources include the period of the paging information, the resource configuration of the paging occasion (PO) and the resource configuration of the paging frame (PF).

In some possible implementations, the first type of system information may be system information related to mobility measurement configuration information, e.g., system information related to RRM measurement configuration information.

In some possible implementations, the first type of system information includes at least one of the following:
system information related to LP WUS configuration information;
system information related to paging configuration information;
system information related to mobility measurement configuration information;
any system information block SIB.

In this implementation, when one or more of the above system information is changed, the network device 101 will send LP WUS to wake up the user equipment 102.

In some possible implementations, after the network device 101 sends LP WUS, the user equipment 102 can be waked up and enter the working state to perform corresponding operations.

It is worth noting that the embodiment of the present disclosure is intended to illustrate the timing of the network device 101 sending LP WUS in the scenario of system information is changed. For scenarios other than system information is changed, the network device 101 may still send LP WUS for other reasons. The embodiment of the present disclosure does not limit the way of sending LP WUS in scenarios other than system information is changed.

In the embodiment of the present disclosure, when the first type of system information is changed, the network device 101 sends LP WUS to the user equipment 102 to wake up the user equipment 102 in time, thereby optimizing the timing of the network device 101 sending LP WUS, which is conducive to maintaining the energy saving of the user equipment 102 on the basis of timely scheduling of the user equipment.

The embodiment of the present disclosure provides a method for sending a wake-up signal, which is executed by the network device 101. The method includes step S301, specifically:
Step S301', when the first type of system information is changed, the network device 101 sends a low power wake-up signal LP WUS to the user equipment 102. When the system information other than the first type of system information is changed, the LP WUS is not sent.

In some possible implementations, the first type of system information may be system information related to the LP WUS configuration information.

In one example, when the SI related to the LP WUS configuration information is changed, the network device 101 sends LP WUS to wake up the user equipment 102 to prompt the user equipment 102 that the LP WUS configuration information has changed. In this example, when the SI related to the LP WUS configuration information has not changed, the network device 101 does not send the LP WUS.

When the user equipment 102 is in the state of monitoring the LP WUS, it may not need to monitor the paging information, nor do it need to perform mobility measurements such as RRM measurements. Therefore, in this example, when other system information (e.g., system information related to the paging configuration information or system information related to the mobility measurement configuration information) is changed, the network device 101 does not need to send the LP WUS to wake up the user equipment.

In some possible implementations, the first type of system information may be system information related to the paging configuration information.

In one example, when the SI related to the paging configuration information is changed, the network device 101 sends the LP WUS to wake up the user equipment 102 to prompt the user equipment 102 that the paging configuration information has changed. In this example, when other system information other than the system information related to the paging configuration information is changed, the network device 101 does not send the LP WUS.

In some possible implementations, the first type of system information may be system information related to the mobility measurement configuration information.

In one example, when the SI related to the mobility measurement configuration information is changed, the network device 101 sends LP WUS to wake up the user equipment 102 to prompt the user equipment 102 that the mobility measurement configuration information has changed. In this example, when other system information other than the system information related to the mobility measurement configuration information is changed, the network device 101 does not send LP WUS.

In some possible implementations, the first type of system information includes at least one of the following:
system information related to LP WUS configuration information;
system information related to paging configuration information;
system information related to mobility measurement configuration information;
any system information block SIB.

In this implementation, when one or more items of information in the three types of system information change, the network device 101 will send LP WUS to wake up the user equipment 102. When other system information other than the above three types of system information is changed, the network device 101 will not send LP WUS to wake up the user equipment 102.

In the embodiment of the present disclosure, the network device 101 sends LP WUS to wake up the user equipment 102 only when the first type of system information is changed, so as to timely schedule the user equipment 102 to perform related operations; when other system information is changed, the user equipment 102 can still keep monitoring the LP WUS to maintain energy saving.

The embodiment of the present disclosure provides a method for sending a wake-up signal, which is executed by the network device 101. Referring to FIG. 4, FIG. 4 is a method for sending a wake-up signal according to an example embodiment. As shown in FIG. 4, the method includes steps S401 to S402, specifically:
Step S401, when the first type of system information is changed, the network device 101 sends a low power wake-up signal LP WUS to the user equipment 102.
Step S402, the network device 101 sends indication information to the user equipment 102, and the indication information is configured to indicate the wake-up reason for waking up the user equipment 102.

The execution sequence of steps S401 and S402 is only for illustration and not limitation. For example, steps S401 and S402 can also be executed synchronously.

In some possible implementations, the indication information represents the reason why the network device 101 wakes up the user equipment 102, that is, it can indicate the relevant behavior of the user equipment 102 after waking up.

In some possible implementations, the network device 101 can send the indication information through downlink control information (DCI).

In some possible implementations, the network device 101 sends the indication information through LP WUS.

In one example, the LP WUS includes the indication information. In this example, when the network device 101 sends the LP WUS, it can synchronously indicate the wake-up reason through the LP WUS.

For example, the wake-up reason is indicated through the setting information field in the LP WUS. The setting information field includes one or more bits. Each bit value corresponding to one or more bits in the setting information field corresponds to a wake-up reason, that is, different bit values in the setting information field correspond to different wake-up reasons. Take the setting information field containing one bit as an example for explanation, when the bit value is 0, it corresponds to monitoring paging information, and when the bit value is 1, it corresponds to performing mobility measurement.

In some possible implementations, the wake-up reason is configured to indicate at least one of the following:
monitoring paging information;
performing mobility measurement;
monitoring system information other than the first type of system information.

In this implementation, when the wake-up reason is monitoring paging information, it is configured to indicate that the behavior performed by the user equipment 102 after waking up is monitoring paging information.

In this implementation, when the wake-up reason is performing mobility measurement, it is configured to indicate that the behavior performed by the user equipment 102 after waking up is performing mobility measurement.

In this implementation, when the wake-up reason is system information other than the first type of system information, for example, when it is SI other than monitoring paging information, it is configured to indicate that the behavior performed by the user equipment 102 after waking up is monitoring system information, so as to perform other operations in combination with the system information.

In the embodiment of the present disclosure, in the process of sending LP WUS to wake up the user equipment 102, the network device 101 may also send a wake-up reason to indicate the behavior performed by the user equipment 102 after waking up, so as to improve communication efficiency.

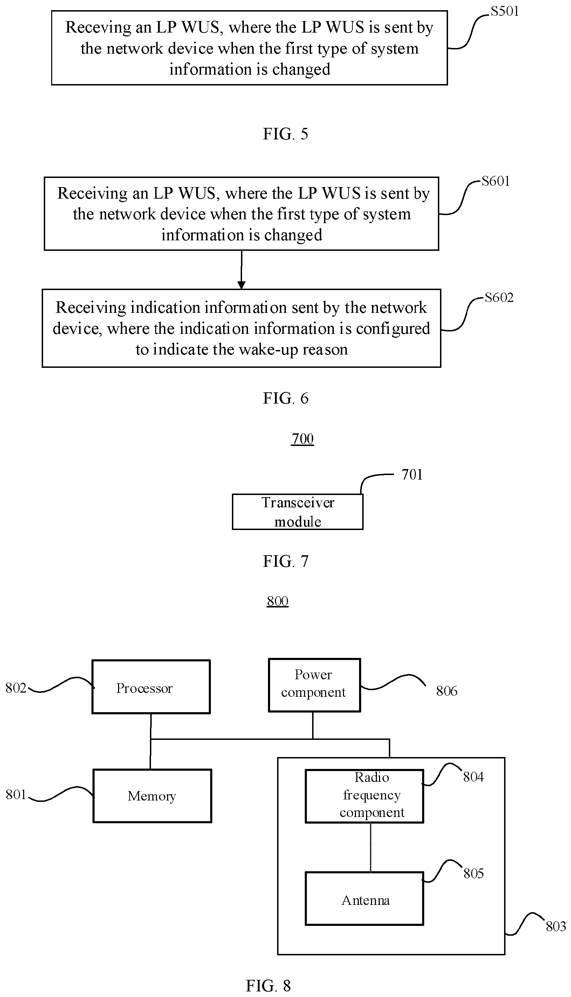

The present disclosure embodiment provides a method for receiving a wake-up signal, which is executed by the user equipment 102. Referring to FIG. 5, FIG. 5 is a method for receiving a wake-up signal according to an example embodiment. As shown in FIG. 5, the method includes step S501, specifically:
Step S501, the user equipment 102 receives an LP WUS, and the LP WUS is sent by the network device 101 when the first type of system information is changed.

When the system information other than the first type of system information is changed, the network device 101 does not send the LP WUS.

In some possible implementations, before receiving the LP WUS, the user equipment 102 may be in a state of monitoring the LP WUS to achieve energy saving of the user equipment 102.

In some possible implementations, in the state of monitoring the LP WUS, the main receiver of the user equipment 102 is in a sleep state to achieve energy saving, and monitors the LP WUS through a low-power receiver.

In some possible implementations, after detecting the LP WUS upon monitoring, the main receiver of the user equipment 102 is passively awakened, converted from the sleep state to the working state, and can monitor the corresponding PDCCH.

In some possible implementations, the first type of system information belongs to the first part of the system information. The first part of the system information meets the following characteristics: the UE is required to update the system information to always retain the valid version of the system information of this type.

In some possible implementations, the first type of system information may be any system information block SIB.

In some possible implementations, the first type of system information may be system information related to the LP WUS configuration information.

In some possible implementations, the first type of system information may be system information related to the paging configuration information.

In some possible implementations, the first type of system information may be system information related to mobility measurement configuration information, e.g., system information related to RRM measurement configuration information.

In some possible implementations, the first type of system information includes at least one of the following:
system information related to LP WUS configuration information;
system information related to paging configuration information;
system information related to mobility measurement configuration information;
any system information block SIB.

In this implementation, when one or more items of information in the three types of system information change, the network device 101 will send LP WUS to wake up the user equipment 102. When other system information other than the above three types of system information is changed, the network device 101 will not send LP WUS to wake up the user equipment 102.

In the embodiment of the present disclosure, when the first type of system information is changed, the network device sends LP WUS to the user equipment to wake up the user equipment in time, thereby optimizing the timing of the network device sending LP WUS, which is conducive to maintaining energy saving of the user equipment on the basis of timely scheduling of the user equipment.

The embodiment of the present disclosure provides a method for receiving a wake-up signal, which is executed by the user equipment 102. The method includes step S501', specifically:
Step S501', user equipment 102 receives LP WUS sent by network device 101 when the first type of system information is changed. After receiving LP WUS, the user equipment 102 first monitors system information after switching from sleep state to working state.

In some possible implementations, in the scenario where the first type of system information is changed, the user equipment 102 wakes up after LP WUS is detected upon monitoring, that is, switches from sleep state to working state, and the behavior after waking up is monitoring system information to obtain updated system information.

In some possible implementations, in the scenario where the first type of system information does not change, network device 101 may not send LP WUS to wake up user equipment 102.

In some possible implementations, the user equipment 102 first obtains system information after waking up, and then performs other operations in combination with system information, such as monitoring paging information or performing mobility measurement.

In the embodiment of the present disclosure, in the scenario where network device 101 does not indicate the wake-up reason or behavior, the user equipment 102 may first monitor system information after waking up and perform relevant operations according to the system information.

The embodiment of the present disclosure provides a method for receiving a wake-up signal, which is performed by a user equipment 102. Referring to FIG. 6, FIG. 6 is a method for receiving a wake-up signal according to an example embodiment. As shown in FIG. 6, the method includes steps S601 to S602, specifically:
Step S601, the user equipment 102 receives an LP WUS, and the LP WUS is sent by the network device 101 when the first type of system information is changed.
Step S602, the user equipment 102 receives indication information sent by the network device 101, and the indication information is configured to indicate the wake-up reason.

The execution sequence of steps S601 and S602 is only for illustration and not limitation. For example, steps S601 and S602 can also be executed synchronously.

In some possible implementations, the wake-up reason may indicate the behavior of the user equipment 102 after wake-up.

In some possible implementations, the network device 101 may send the indication information through DCI.

In some possible implementations, the network device 101 sends the indication information through LP WUS.

In one example, the LP WUS includes the indication information. In this example, when the network device 101 sends the LP WUS, it can synchronously indicate the wake-up reason through the LP WUS.

For example, the wake-up reason is indicated through the setting information field in the LP WUS. The setting information field includes one or more bits. Each bit value corresponding to one or more bits in the setting information field corresponds to a wake-up reason, that is, when the bit value of the setting information field is different, the corresponding wake-up reason is different. Take the setting information field containing one bit as an example for explanation. When the bit value is 0, it corresponds to monitoring paging information, and when the bit value is 1, it corresponds to performing mobility measurement.

In this example, after the user equipment 102 receives the LP WUS, it can know the wake-up reason, and also know the behavior after wake-up.

In some possible implementations, the wake-up reason is configured to indicate at least one of the following:
monitoring paging information;
performing mobility measurement;
monitoring system information other than the first type of system information.

In some implementations, when the wake-up reason is monitoring paging information, it is configured to indicate that the behavior performed by the user equipment 102 after waking up is monitoring paging information.

In one example, when the LP WUS carries a wake-up reason and the wake-up reason indicates monitoring paging information, the method may include the following steps S601, S602, and S603-1, where:
Step S603-1, when the wake-up reason indicates monitoring paging information, after receiving the LP WUS, the user equipment 102 first monitors the paging information or system information after switching from the sleep state to the working state.

In this example, according to whether the changed SI is system information related to the paging configuration information, there are two cases of UE behavior. For example, if the first type of system information includes system information related to the paging configuration information, after receiving the LP WUS, the user equipment 102 first monitors the paging information after switching from the sleep state to the working state, see the following steps S603-12 or S603-14. For another example, if the first type of system information is system information related to LP WUS configuration information, or does not include system information related to paging configuration information, after receiving LP WUS, the user equipment 102 first monitors the system information related to paging configuration information after switching from sleep state to working state, see the following step S603-11 or S603-13.

For ease of understanding, step S603-1 may be one of S603-11 to S603-14, specifically:

Step S603-11, if the first type of system information is system information related to LP WUS configuration information, the user equipment 102 first monitors the system information related to paging configuration information after switching from sleep state to working state.

When the system information related to LP WUS configuration information is changed, the network device 101 sends LP WUS to wake up the user equipment 102, and in the scenario where the wake-up reason indicated in the LP WUS is to monitor paging information, the main receiver is awakened after the low-power receiver of the user equipment 102 detects LP WUS upon monitoring. After the main receiver of the user equipment 102 is awakened, it first monitors the system information related to the paging configuration information, and then monitors the paging information.

It is worth noting that when the first type of system information is system information related to the LP WUS configuration information, and indicates that the system information related to the paging configuration information is changed, the network device 101 may not send the LP WUS, so the paging configuration information stored in the user equipment 102 may not be updated for a long time, so it is necessary to first monitor the system information related to the paging configuration information.

Step S603-12, if the first type of system information is system information related to the paging configuration information, the user equipment 102 first monitors the paging information after switching from the sleep state to the working state.

When the system information related to the paging configuration information is changed, the network device 101 sends the LP WUS to wake up the user equipment 102, and indicates in the LP WUS that the wake-up reason is to monitor the paging information. In such scenario, the low-power receiver of the user equipment 102 wakes up the main receiver after detecting the LP WUS upon monitoring. After the main receiver of the user equipment 102 is awakened, it first monitors the system information to obtain the latest paging configuration information, and then monitors the paging information.

Step S603-13, if the first type of system information is system information related to mobility measurement configuration information, the user equipment 102 first monitors the system information related to the paging configuration information after switching from the sleep state to the working state.

When the system information related to the mobility measurement configuration information is changed, the network device 101 sends LP WUS to wake up the user equipment 102, and indicates in the LP WUS that the wake-up reason is to monitor the paging information. In such scenario, the low-power receiver of the user equipment 102 wakes up the main receiver after detecting the LP WUS upon monitoring. After the main receiver of the user equipment 102 is awakened, it first monitors the system information related to the paging configuration information, and then monitors the paging information.

Step S603-14, if the first type of system information is any SIB, the user equipment 102 first monitors the paging information after switching from the sleep state to the working state

In this example, when any SIB is changed, the network device 101 sends LP WUS to wake up the user equipment 102, and indicates in the LP WUS that the wake-up reason is to monitor the paging information. In such scenario, the low-power receiver of the user equipment 102 wakes up the main receiver after detecting the LP WUS upon monitoring. After the main receiver of the user equipment 102 is awakened, it first directly monitors the paging information according to the previously saved configuration information of the paging information, without having to first monitor the system information, so as to improve the communication efficiency.

In some embodiments, when the wake-up reason is to perform mobility measurement, it indicates that the behavior performed by the user equipment 102 after awakening is performing mobility measurement.

In an example, when the LP WUS carries the wake-up reason, and the wake-up reason indicates to perform mobility measurement, the method may include the following steps S601, S602 and S603-2, where:
Step S603-2, when the wake-up reason indicates to perform mobility measurement, after receiving the LP WUS, the user equipment 102 first performs mobility measurement or monitors system information after switching from the sleep state to the working state.

In this example, according to whether the changed SI is system information related to the mobility measurement configuration information, there are two cases of UE behavior. For example, if the first type of system information is system information related to LP WUS configuration information, or does not include system information related to mobility measurement configuration information, after receiving the LP WUS, the user equipment 102 first monitors the system information related to the mobility measurement configuration information after switching from the sleep state to the working state, see the following step S603-21 or S603-22. For another example, if the first type of system information includes system information related to the mobility measurement configuration information, after receiving the LP WUS, the user equipment 102 first performs the mobility measurement after switching from the sleep state to the working state, see the following step S603-23 or S603-24.

For ease of understanding, step S603-2 may be one of steps S603-21 to S603-24, specifically:
Step S603-21, if the first type of system information is system information related to LP WUS configuration information, the user equipment 102 first monitors the system information related to the mobility measurement configuration information after switching from the sleep state to the working state.

When the system information related to the LP WUS configuration information is changed, the network device 101 sends LP WUS to wake up the user equipment 102, and indicates in the LP WUS that the wake-up reason is performing mobility measurement. In such scenario, the main receiver is awakened after the lower power receiver of the user equipment 102 detects LP WUS upon monitoring. After being awakened, the main receiver of the network first monitors the system information and then performs mobility measurement.

Step S603-22, if the first type of system information is system information related to paging configuration information, the user equipment 102 first monitors the system information related to the mobility measurement configuration information after switching from the sleep state to the working state.

When the system information related to the paging configuration information is changed, the network device 101 sends an LP WUS to wake up the user equipment 102, and indicates in the LP WUS that the wake-up reason is performing mobility measurement. In such scenario, the main receiver is awakened after the low power receiver of the user equipment 102 detects the LP WUS upon monitoring. After the main receiver of the user equipment 102 is awakened, it first monitors the system information related to the mobility measurement configuration information to obtain the latest mobility measurement configuration information, and then performs mobility measurement.

Step S603-23, if the first type of system information is system information related to the mobility measurement configuration information, the user equipment 102 first performs mobility measurement after switching from the sleep state to the working state.

In this example, when the system information related to the mobility measurement configuration information is changed, the network device 101 sends an LP WUS to wake up the user equipment 102, and indicates in the LP WUS that the wake-up reason is performing mobility measurement. In such scenario, the main receiver is awakened after the low power receiver of the user equipment 102 detects the LP WUS upon monitoring. After the main receiver of the user equipment 102 is awakened, it can directly perform mobility measurement such as RRM measurement without having to monitor the system information first.

Step S603-24, if the first type of system information is any SIB, the user equipment 102 first performs mobility measurement after switching from the sleep state to the working state.

When any SIB is changed, the network device 101 sends LP WUS to wake up the user equipment 102, and indicates in the LP WUS that the wake-up reason is performing mobility measurement. In such scenario, the main receiver is awakened after the low-power receiver of the user equipment 102 detects the LP WUS upon monitoring. After the main receiver of the user equipment 102 is awakened, it first directly performs mobility measurement such as RRM measurement according to the previously saved configuration information of the mobility measurement, without having to first monitor the system information, so as to improve communication efficiency.

In some embodiments, when the wake-up reason is system information other than the first type of system information, for example, when it is monitoring SI other than paging information, it indicates that the behavior performed after the user equipment 102 is awakened is monitoring the system information and performing other operations in combination with the system information.

In one example, when the LP WUS carries a wake-up reason, the method may include the following steps S601, S602, and S603-3, where:
Step S603-3, when the wake-up reason indicates monitoring system information other than the first type of system information, after receiving the LP WUS, the user equipment 102 first monitors the system information after switching from the sleep state to the working state.

In this example, the explanation is made by taking the example where the first type of system information includes system information related to the LP WUS configuration information and system information related to the paging configuration information, but does not include system information related to mobility measurement.

When the system information related to the LP WUS configuration information or the system information related to the paging configuration (the first type of system information) is changed, the network device 101 sends the LP WUS to wake up the user equipment 102, and indicates in the LP WUS that the wake-up reason is monitoring the system information (corresponding to monitoring the first type of system information). The low-power receiver of the user equipment 102 wakes up the main receiver after detecting the LP WUS upon monitoring, and the main receiver of the user equipment 102 directly monitors the paging information after being awakened, without first monitoring the system information.

In this example, if the LP WUS indicates that the wake-up reason is performing mobility measurement (corresponding to monitoring system information other than the first type of system information), the low-power receiver of the user equipment 102 wakes up the main receiver after detecting the LP WUS upon monitoring. After the main receiver of the user equipment 102 is awakened, it first monitors the system information related to the mobility measurement configuration information to obtain the latest mobility measurement configuration information, and then performs mobility measurement such as RRM measurement.

In the embodiment of the present disclosure, in the scenario where the wake-up reason is indicated during the process of the network device 101 sending the LP WUS, the user equipment 102 can perform related operations in combination with the wake-up reason. Combined with the system information, operations such as monitoring paging or RRM measurement are performed.

Based on the same concept as the above method embodiment, the embodiment of the present disclosure also provides a device for sending a wake-up signal, which can have the function of the network device 101 in the above method embodiment, and can be configured to perform the steps performed by the network device 101 provided in the above method embodiment. The function can be implemented by hardware, or by software or by hardware executing the corresponding software. The hardware or software includes one or more modules corresponding to the above function.

In a possible implementation, the device 700 shown in FIG. 7 can be used as the network device 101 involved in the above method embodiment, and execute the steps executed by the network device 101 in the above method embodiment. As shown in FIG. 7, the device 700 may include a transceiver module 701, where the transceiver module 701 can be configured to support the communication device to communicate, and the transceiver module 701 can have a wireless communication function, for example, it can communicate with other communication devices through a wireless air interface.

When executing the steps implemented by the network device 101, the transceiver module 701 is configured to send a low power wake-up signal LP WUS to the user equipment when the first type of system information is changed.

When the communication device is the network device 101, its structure can also be shown in FIG. 8. The structure of the communication device is illustrated by taking a base station as an example. As shown in FIG. 8, the device 800 includes a memory 801, a processor 802, a transceiver component 803, and a power supply component 806. The memory 801 is coupled with the processor 802, and can be configured to store the programs and data necessary for the communication device 800 to implement various functions. The processor 802 is configured to support the communication device 800 to perform the corresponding functions in the above method, and the functions can be implemented by calling the program stored in the memory 801. The transceiver component 803 can be a wireless transceiver, which can be configured to support the communication device 800 to receive signaling and/or data, and send signaling and/or data through the wireless air interface. The transceiver component 803 can also be called a transceiver unit or a communication unit. The transceiver component 803 may include a radio frequency component 804 and one or more antennas 805, where the radio frequency component 804 can be a remote radio unit (RRU), which can be used for the transfer of radio frequency signals and the conversion of radio frequency signals and baseband signals. The one or more antennas 805 can be used for the radiation and reception of radio frequency signals.

When the communication device 800 needs to send data, the processor 802 can perform baseband processing on the data to be sent, and then output the baseband signal to the radio frequency unit. The radio frequency unit performs radio frequency processing on the baseband signal and then sends the radio frequency signal through the antenna in the form of electromagnetic waves. When data is sent to the communication device 800, the radio frequency unit receives the radio frequency signal through the antenna, converts the radio frequency signal into a baseband signal, and outputs the baseband signal to the processor 802, which converts the baseband signal into data and processes the data.

Based on the same concept as the above method embodiment, the embodiment of the present disclosure also provides a device for receiving a wake-up signal, which may have the function of the user equipment 102 in the above method embodiment, and may be configured to execute the steps performed by the user equipment 102 provided by the above method embodiment. The function may be implemented by hardware, or by software or by hardware executing the corresponding software. The hardware or software includes one or more modules corresponding to the above functions.

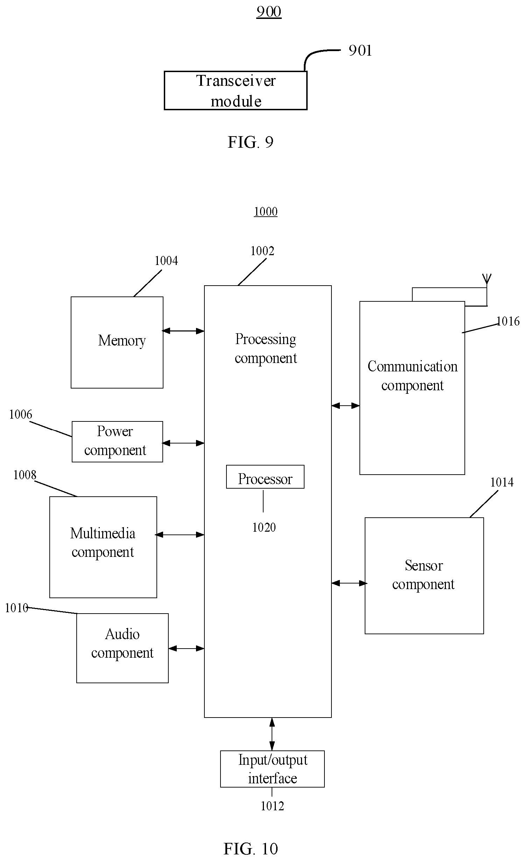

In a possible implementation, the device 900 shown in FIG. 9 may be used as the user equipment 102 involved in the above method embodiment, and execute the steps performed by the user equipment 102 in the above method embodiment. As shown in FIG. 9, the device 900 may include a transceiver module 901, where the transceiver module 901 may be configured to support the communication device to communicate, and the transceiver module 901 may have a wireless communication function, for example, it can communicate wirelessly with other communication devices through a wireless air interface.

When executing the steps implemented by the user equipment 102, the transceiver module 901 is configured to receive an LP WUS, which is sent by the network device when the first type of system information is changed.

When the device receiving the wake-up signal is the user equipment 102, its structure can also be shown in FIG. 10. The device 1000 can be a mobile phone, a computer, a digital broadcast terminal, a message transceiver device, a game console, a tablet device, a medical device, a fitness device, a personal digital assistant, etc.

Referring to FIG. 10, the device 1000 may include one or more of the following components: a processing component 1002, a memory 1004, a power component 1006, a multimedia component 1008, an audio component 1100, an input/output (I/O) interface 1012, a sensor component 1014, and a communication component 1016.

The processing component 1002 generally controls the overall operation of the device 1000, such as operations associated with display, phone calls, data communications, camera operations, and recording operations. The processing component 1002 may include one or more processors 1020 to execute instructions to complete all or part of the steps of the above method. In addition, the processing component 1002 may include one or more modules to facilitate the interaction between the processing component 1002 and other components. For example, the processing component 1002 may include a multimedia module to facilitate the interaction between the multimedia component 1008 and the processing component 1002.

The memory 1004 is configured to store various types of data to support the operation of the device 1000. Examples of such data include instructions for any application or method operating on the device 1000, contact data, phone book data, messages, pictures, videos, etc. The memory 1004 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 1006 provides power to various components of the device 1000. The power component 1006 may include a power management system, one or more power supplies, and other components associated with generating, managing, and distributing power for the device 1000.

The multimedia component 1008 includes a screen that provides an output interface between the device 1000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 1008 includes a front camera and/or a rear camera. When the device 1000 is in an operating mode, such as a shooting mode or a video mode, the front camera and/or the rear camera may receive external multimedia data. Each of the front camera and the rear camera may be a fixed optical lens system or have focal length and optical zoom capabilities.

The audio component 1100 is configured to output and/or input audio signals. For example, the audio component 1100 includes a microphone (MIC), which is configured to receive external audio signals when the device 1000 is in an operating mode, such as a call mode, a recording mode, and a voice recognition mode. The received audio signal can be further stored in the memory 1004 or sent via the communication component 1016. In some embodiments, the audio component 1100 also includes a speaker for outputting audio signals.

The I/O interface 1012 provides an interface between the processing component 1002 and the peripheral interface module. The peripheral interface module can be a keyboard, a click wheel, a button, etc. These buttons may include, but are not limited to: a home button, a volume button, a start button, and a lock button.

The sensor assembly 1014 includes one or more sensors for providing various aspects of the status assessment of the device 1000. For example, the sensor assembly 1014 can detect the open/closed state of the device 1000, the relative positioning of components, such as the display and keypad of the device 1000. The sensor assembly 1014 can also detect the position change of the device 1000 or a component of the device 1000, the presence or absence of user contact with the device 1000, the orientation or acceleration/deceleration of the device 1000, and the temperature change of the device 1000. The sensor assembly 1014 can include a proximity sensor configured to detect the presence of nearby objects without any physical contact. The sensor assembly 1014 can also include an optical sensor, such as a CMOS or CCD image sensor, for use in imaging applications. In some embodiments, the sensor assembly 1014 can also include an accelerometer, a gyroscope sensor, a magnetic sensor, a pressure sensor, or a temperature sensor.

The communication component 1016 is configured to facilitate wired or wireless communication between the device 1000 and other devices. The device 1000 can access a wireless network based on a communication standard, such as WiFi, 2G or 3G, or a combination thereof. In an example embodiment, the communication component 1016 receives a broadcast signal or broadcast-related information from an external broadcast management system via a broadcast channel. In an example embodiment, the communication component 1016 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an example embodiment, the device 1000 can be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components for performing the above method.

In an example embodiment, a non-transitory computer-readable storage medium including instructions is also provided, such as a memory 1004 including instructions, and the above instructions can be executed by the processor 1020 of the device 1000 to complete the above method. For example, the non-transitory computer-readable storage medium may be a ROM, a random access memory (RAM), a CD-ROM, a magnetic tape, a floppy disk, and an optical data storage device, etc.

After considering the specification and practicing the present disclosure herein, those skilled in the art will easily think of other implementations of the embodiments of the present disclosure. The present disclosure is intended to cover any variation, use, or adaptive change of the embodiments of the present disclosure, which follows the general principles of the embodiments of the present disclosure and includes common knowledge or conventional technical means in the technical field that are not disclosed in the present disclosure. The specification and embodiments are only to be regarded as exemplary, and the true scope and spirit of the embodiments of the present disclosure are indicated by the following claims.

It should be understood that the embodiments of the present disclosure are not limited to the precise structures described above and shown in the accompanying drawings, and various modifications and changes can be made without departing from the scope thereof. The scope of the embodiments of the present disclosure is limited only by the attached claims.

### Industrial Applicability

In the method of the present disclosure, when the first type of system information changes, the network device sends an LP WUS to the user equipment to wake up the user equipment in time, thereby optimizing the timing of the network device sending the LP WUS, which is conducive to maintaining the energy saving of the user equipment on the basis of timely scheduling of the user equipment.

## Claims

1. A method for sending a wake-up signal, performed by a network device, comprising:
when a first type of system information is changed, sending a low power wake-up signal LP WUS to a user equipment.

2. The method according to claim 1, further comprising:
when system information other than the first type of system information is changed, not sending the LP WUS.

3. The method according to claim 1, further comprising:
sending indication information to the user equipment, wherein the indication information is configured to indicate a wake-up reason for waking up the user equipment.

4. The method according to claim 3, wherein the LP WUS comprises the indication information.

5. The method according to claim 3, wherein the wake-up reason is configured to indicate at least one of:
monitoring paging information;
performing mobility measurement; or
monitoring system information other than the first type of system information.

6. The method according to any one of claims 1 to 5, wherein the first type of system information comprises at least one of:
system information related to LP WUS configuration information;
system information related to paging configuration information;
system information related to mobility measurement configuration information; or
any system information block SIB.

7. A method for receiving a wake-up signal, performed by a user equipment, comprising:
receiving an LP WUS, wherein the LP WUS is sent by a network device when a first type of system information is changed.

8. The method according to claim 7, further comprising:
after receiving the LP WUS, the user equipment first monitoring system information after switching from a sleep state to a working state.

9. The method according to claim 7, further comprising:
receiving indication information sent by the network device, wherein the indication information is configured to indicate a wake-up reason.

10. The method according to claim 9, wherein the LP WUS comprises the indication information.

11. The method according to claim 9, wherein the wake-up reason is configured to indicate at least one of:
monitoring paging information;
performing mobility measurement; or
monitoring system information other than the first type of system information.

12. The method according to claim 7 or 9, wherein the first type of system information comprises at least one of:
system information related to LP WUS configuration information;
system information related to paging configuration information;
system information related to mobility measurement configuration information; and
any system information block SIB.

13. The method according to any one of claims 9 to 12, wherein when the wake-up reason indicates monitoring paging information, the method further comprises one of:
if the first type of system information comprises system information related to paging configuration information, after receiving the LP WUS, the user equipment first monitoring paging information after switching from a sleep state to a working state; or
if the first type of system information is system information related to LP WUS configuration information, or the first type of system information does not comprise system information related to paging configuration information, after receiving the LP WUS, the user equipment first monitoring the system information related to the paging configuration information after switching from a sleep state to a working state.

14. The method according to any one of claims 9 to 12, wherein when the wake-up reason indicates performing mobility measurement, the method further comprises one of:
if the first type of system information is system information related to LP WUS configuration information, or the first type of system information does not comprise system information related to mobility measurement configuration information, after receiving the LP WUS, the user equipment first monitoring the system information related to the mobility measurement configuration information after switching from a sleep state to a working state; or
if the first type of system information comprises system information related to mobility measurement configuration information, after receiving the LP WUS, the user equipment first performing mobility measurement after switching from a sleep state to a working state.

15. The method according to any one of claims 9 to 12, further comprising:
when the wake-up reason indicates monitoring system information other than the first type of system information, after receiving the LP WUS, the user equipment first monitoring system information after switching from a sleep state to a working state.

16. A device for sending a wake-up signal, configured in a network device, the device comprising:
a transceiver module, configured to send a low power wake-up signal LP WUS to a user equipment when a first type of system information is changed.

17. A device for receiving a wake-up signal, configured in a user equipment, the device comprising:
a transceiver module, configured to receive an LP WUS, wherein the LP WUS is sent by a network device when a first type of system information is changed.

18. A network device, comprising a processor and a memory, wherein
the memory is configured to store a computer program; and
the processor is configured to execute the computer program to implement the method according to any one of claims 1 to 6.

19. A user equipment, comprising a processor and a memory, wherein
the memory is configured to store a computer program; and
the processor is configured to execute the computer program to implement the method according to any one of claims 7 to 15.

20. A computer-readable storage medium, wherein instructions are stored in the computer-readable storage medium, and when the instructions are called and executed on a computer, the computer executes the method according to any one of claims 1 to 6.

21. A computer-readable storage medium, wherein instructions are stored in the computer-readable storage medium, and when the instructions are called and executed on a computer, the computer executes the method according to any one of claims 7 to 15.
